**Europäisches Patentamt**

**European Patent Office**

**Office européen des brevets**

(11) Veröffentlichungsnummer: **0 057 241**
**B1**

(12) **EUROPÄISCHE PATENTSCHRIFT**

(45) Veröffentlichungstag der Patentschrift:
**13.02.85**

(21) Anmeldenummer: **81100750.9**

(22) Anmeldetag: **03.02.81**

(51) Int. Cl.⁴: **B 60 H 1/00**

(54) Helzelement für Fahrzeugsitze.

(43) Veröffentlichungstag der Anmeldung:
**11.08.82 Patentblatt 82/32**

(45) Bekanntmachung des Hinweises auf die Patenterteilung:
**13.02.85 Patentblatt 85/7**

(84) Benannte Vertragsstaaten:
**DE FR GB IT SE**

(73) Patentinhaber: **I.G. Bauerhin GmbH elektro-technische Fabrik, D-6466 Gründau-Rothenbergen (DE)**

(72) Erfinder: **Altmann, Dieter, Herzbergstrasse 23, D-6466 Gründau-Lieblos (DE)**
Erfinder: **Haupt, Eberhard, Im Rohr, D-6466 Gründau-Rothenbergen (DE)**

(74) Vertreter: **Munderich, Paul, Dipl.-Ing., Frankfurter Strasse 84, D-6466 Gründau-Rothenbergen (DE)**

(56) Entgegenhaltungen:
**DE - A - 1 816 051**
**DE - A - 2 833 946**
**DE - U - 7 737 010**
**FR - A - 783 413**
**FR - A - 2 341 287**

## Beschreibung

Die Erfindung betrifft ein Heizelement für Fahrzeugsitze, das aus mindestens zwei Schichten eines tragenden elastischen Materials und einem zwischen diesen Schichten mäander- oder wellenförmig oder dgl. verlegten elektrischen Heizleiter besteht, und das vorzugsweise unmittelbar unterhalb des Sitzbezuges angeordnet werden kann, sowie getrennt oder zusammen mit dem Sitzbezug in eine Form einer Herstellungsvorrichtung einbringbar ist.

Immer mehr geht man dazu über, Fahrzeugsitze elektrisch zu beheizen.

Auch bei einem PKW erwärmt sich, trotz guter Innenraumbeheizung, das Bezugsmaterial des Sitzes, wenn es einmal ausgekühlt ist, da der Wärmeübergang durch die Warmluftheizung nur geringfügig ist, sehr langsam.

Aus diesem Grund kommt der Benutzer in aller Regel mit den kalten Sitzflächen der Polsterung in Berührung und entzieht damit, über einen gewissen Zeitraum, d. h. bis zur Angleichung der Temperaturen, dem Körper Wärme. Dies ist bei vorliegenden Erkrankungen oder gegebenen Anfälligkeiten äußerst schädlich (Rheuma, Bandscheiben-, Nieren-, Blasenleiden, Hämorrhoiden usw.).

Eine elektrische Sitzheizung wirkt dem entgegen, sie spricht aber nur schnell genug an, wenn das Heizelement ·dicht unter der Bezugsstoffoberfläche angeordnet ist.

Der Erfüllung dieser Erfordernisse steht die Schwierigkeit entgegen, das Heizelement bzw. dessen Befestigung so zu gestalten, daß sowohl Überdehnungen als auch Faltenbildungen vermieden werden, da beide Beanspruchungen in kürzester Zeit zu Heizleiterbrüchen führen.

Dieser Sachlage versucht man auf die verschiedensten Weisen gerecht zu werden.

So versucht man z. B. durch eine zur Versteifung führenden Verstärkung des Heizelementes und dessen geeignete Befestigung auf dem Innenpolster, d. h. auf dem Polsterkern, einer möglichen Faltenbildung während des Gebrauches entgegen zu wirken.

Der übliche Weg ist eine Verstärkung des Heizelementes und dessen Anordnung unter der obersten Polsterschicht. Dadurch wird verhindert, daß die durch das Ein- und Aussteigen hervorgerufene seitliche Verschiebung des Bezugsstoffes, die eine Faltenbildung der Heizelemente zur Folge haben kann, nicht auf das Heizelement einwirkt.

Mit dieser Lösung muß aber eine langsamere Erwärmung der Sitzoberfläche in Kauf genommen werden; sie läuft daher dem Sinn und Zweck der Sitzbeheizung entgegen.

Der mögliche Ausweg, d. h. eine höhere Heizleistung zu installieren, um wenigstens nach einer einigermaßen kurzen Zeit Wärme zu spüren, belastet das Bordnetz des Fahrzeuges unnötig hoch. Diese Schwierigkeit tritt insbesondere bei geschäumten Polstern auf, bei denen zwischen dem Bezug und dem Polsterkern eine unmittelbare Bindung besteht.

Hier muß der Bezug im nachhinein partiell vom Polsterkern gelöst, dieser etwa parallel zur Sitzebene verlaufend aufgeschnitten, das Heizelement zwischen die entstehenden Schichten gelegt und dieses zusammen mit der bei Einbindung des Kerns in den Bezug durch Nachschäumen fixiert werden.

Eine Anordnung des Heizelementes unmittelbar unter dem Bezug vor dem Schaumprozeß scheidet im Hinblick auf die nicht ausreichende, einen Heizleiterbruch begünstigende Elastizität der bekannten Heizelemente aus.

Zum weiteren Stand der Technik wird auf die deutsche Gebrauchsmuster-Schrift 7 737 010 hingewiesen. Durch diese Schrift wurde eine Heizvorrichtung, d. h. ein Heizelement für die Beheizung von Sitzen von Kraftfahrzeugen bekannt, das der eingangs genannten Art entspricht.

Die äußere Formgebung dieses vorgeschlagenen Heizelementes ist durch dessen vorgesehene Einbringung in die Pfeifen der Polsterung bestimmt, d. h. das Heizelement bildet einzelne in ein Basisteil einmündende Streifen. Der wellen- oder mäanderförmig verlegte Heizleiter ist in den Streifen lediglich an einigen, räumlich voneinander getrennten Stellen befestigt, wobei für die Festlegung eine Klebeverbindung vorgesehen ist. Als Isoliermaterial wird ein aus Polyurethan bestehendes Vliesmaterial genannt.

Diese Ausbildung eines Heizelementes erlaubt zwar, in Richtung der einzelnen Streifen, d. h. in Richtung des Heizleiterverlaufes, eine gewisse eingeschränkte Dehnung, die jedoch mit der Gefahr verbunden ist, daß sich die zwischen den Festpunkten etwa parallel und lose gelegten Heizleiter, bei Streckung des Heizelementes in Richtung des Heizleiterverlaufes und damit bei teilweiser Aufhebung der beispielsweisen wellenförmigen Führung berühren und hierbei, durch die nicht vorgesehene Eigenisolierung des Heizleiters, Unterbrechungen bzw. Kurzschluß ermöglichen. Dies gilt auch bei Knickbildung des Heizelementes, d. h. für das damit verbundene Stauchen der Heizleiter.

Unabhängig von der Gefahr der Zerstörung ist jedoch durch die mangelhafte Führung des Heizleiters die Gefahr gegeben, daß sich diese, bedingt durch die Beanspruchung, ineinander in ihrer Lage mehr oder weniger stark verschieben, so daß die mit der ursprünglichen Verlegung der Heizleiter beabsichtigte gleichmäßige Wärmeabgabe über die Heizfläche durch die tägliche Beanspruchung mehr und mehr beeinträchtigt wird.

Der Fahrzeugsitz behält, auf die Dauer gesehen, nicht seine ursprüngliche Form, sondern er paßt sich mehr und mehr den Belastungsbeanspruchungen an.

Diese Sachlage berücksichtigend, ist es Aufgabe dieser Erfindung, ein Heizelement nach der eingangs beschriebenen Art zu nennen, das einen guten Wärmeübergang zur Sitzoberfläche zuläßt, und das so elastisch ist, daß es die beim Benutzen des Sitzes auftretenden Spannungen und Faltenbildung, ohne Belastung des Heizleiters, in sich ausgleichen und mit dem Sitz eine Einheit bilden kann.

Die erfindungsgemäße Lösung dieser Aufgabe sieht vor, daß die Schichten des Trägermaterials des Heizelementes ein gewirktes Textilmaterial sind, das nach allen Richtungen ein elastisches Dehnungsverhalten aufweist, und daß der isolierte und nicht klebende Heizleiter zwischen die sonst verklebten Schichten des Trägermaterials über seine ganze Länge verschiebbar eingebracht ist, wobei das Maß der maximalen Verschiebung des Heizleiters gleich oder größer als das additive, aus Dehnungen verschiedener Richtung überlagernd sich bildende mögliche Summendehnungsmaß des Trägermaterials ist.

Die Anordnung des Heizleiters zwischen Schichten gewirkten, d. h. verstrickten Textilmaterialien, in Verbindung mit der bekannten mäander- oder wellenförmigen Führung des Heizleiters gewährleistet nicht nur eine überraschend hohe Elastizität des Heizelementes, sondern die Art der Verbindung der gewählten Textilschichten und die damit verbundene Bildung von Kanälen für die Einlagerung des verschiebbaren Heizleiters ermöglicht eine nahezu lagesichere Führung der Heizleiter zueinander.

Die vorgeschlagenen Maßnahmen erlauben damit die Ausbildung eines Heizelementes entsprechend den Forderungen der Aufgabenstellung.

Das Heizelement kann unmittelbar mit der Unterseite des Sitzbezuges verbunden werden, wobei in aller Regel die Verbindung mit der Unterseite des Sitzbezuges mittels eines dauerelastischen Klebers oder einem elastisch bleibenden Doppelklebeband hergestellt ist.

Die hohe Elastizität des Heizelementes ermöglicht die Bildung eines integrierten Fahrzeugsitzes dergestalt, daß das an der Unterseite des in eine Tiefziehform eingelegten Bezugsstoffes befestigte Heizelement gemeinsam mit dem in diese Tiefziehform eingebrachten Schaumstoff-Polsterkern eine Einheit bildet.

Selbstverständlich kann das Heizelement auch mit der Oberseite des Polsterkerns verbunden werden, wobei die Verbindung in aller Regel mittels dauerelastischen Klebers oder elastischem Doppelklebeband hergestellt ist.

Das Heizelement kann auch um die Seitenflächen des Polsterkerns gezogen und an diesem beliebig befestigt werden.

Ebenso ist es möglich, daß das Heizelement um die Seitenflächen des Polsterkerns gezogen ist und nach Art eines Spannbettbezuges auf diesem befestigt ist.

Ein besonders gutes elastisches Verhalten des Heizelementes ist dann gegeben, wenn die den Heizleiter aufnehmenden Schichten des Trägermaterials aus gewirktem Trikot sind. Im Interesse einer leichten Verschiebbarkeit ist die Isolierung des Heizleiters oberflächenglatt ausgebildet, wobei vorzugsweise eine Teflonisolierung vorgeschlagen wird.

Die Erfindung wird in beispielsweiser Ausführung durch die Zeichnungen näher erläutert.

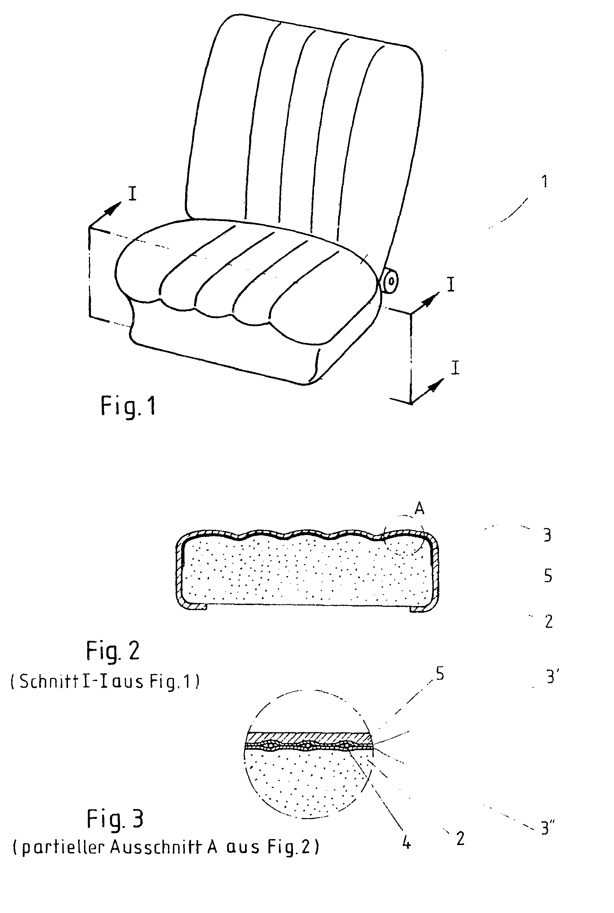

Fig. 1 zeigt den zu beheizenden Sitz in perspektivischer Darstellung.

Fig. 2 zeigt den Schnitt I-I durch Fig. 1. Aus diesem Schnitt ist der Querschnitt eines mit einer Tiefziehform hergestellten Sitzes ersichtlich. Der Bezug — z. B. Kunstleder — wird in die Form eingezogen, das Heizelement eingelegt und anschließend der Polsterkern eingeschäumt. Durch diesen Prozeß werden Bezug, Heizelement und Polsterkern bleibend verbunden und bilden eine Einheit.

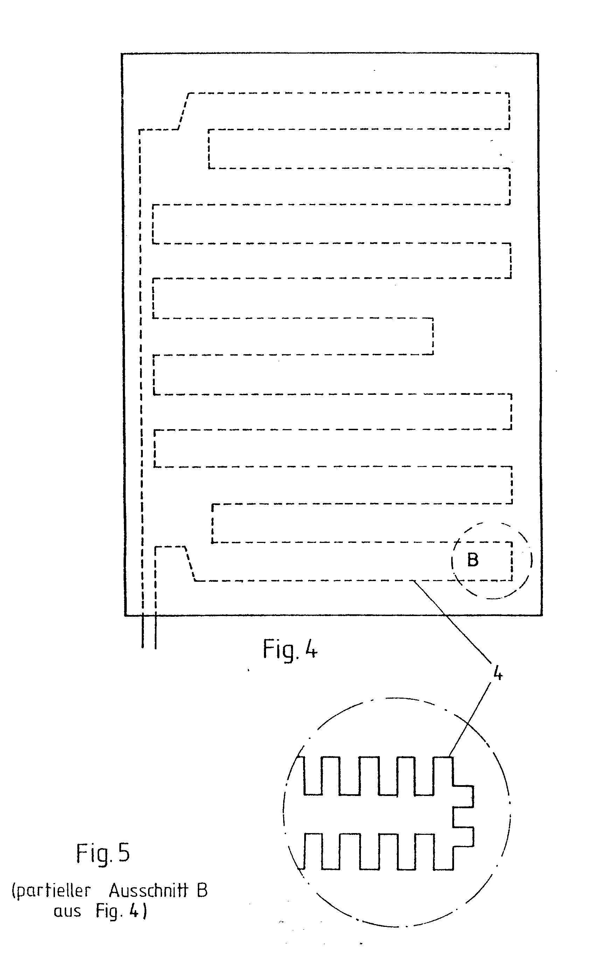

Fig. 3 zeigt den partiellen Ausschnitt A aus Fig. 2 und hebt insbesondere die Ausbildung des Heizelementes hervor.

Fig. 4 zeigt in Draufsicht ein Heizelement und die Lage der Heizleiter.

Fig. 5 zeigt in einem partiellen Ausschnitt B aus Fig. 4 die mäanderförmige Verlegung eines Heizleiters.

Der Fahrzeugsitz 1 baut sich auf einem Polsterkern 2 auf, wobei dessen zur Sitzfläche gerichtete Seite durch das Heizelement 3 abgedeckt ist. Das Heizelement 3 wird durch die aus gewirktem Trägermaterial hergestellten Schichten 3' und 3'' und dem zwischen diesen angeordneten Teflon-isolierten Heizleiter 4 gebildet und der Fahrzeugsitz ist nach oben durch den Bezugsstoff 5 abgedeckt.

## Patentansprüche

1. Heizelement für Fahrzeugsitze (1), das aus mindestens zwei Schichten (3', 3'') eines tragenden elastischen Materials und einem zwischen diesen Schichten (3', 3'') mäander- oder wellenförmig oder dgl. verlegten elektrischen Heizleiter (4) besteht, und das vorzugsweise unmittelbar unterhalb des Sitzbezuges (5) angeordnet werden kann, sowie getrennt oder zusammen mit dem Sitzbezug (5) in eine Form einer Herstellungsvorrichtung einbringbar ist, dadurch gekennzeichnet,
daß die Schichten (3' und 3'') des Trägermaterials des Heizelementes (3) ein gewirktes Textilmaterial sind, das nach allen Richtungen ein elastisches Dehnungsverhalten aufweist, und
daß der isolierte und nicht klebende Heizleiter (4) zwischen die sonst verklebten Schichten (3' und 3'') des Trägermaterials über seine ganze Länge verschiebbar eingebracht ist, wobei das Maß der maximalen Verschiebung des Heizleiters (4) gleich oder größer als das additive, aus Dehnungen verschiedener Richtung überlagernd sich bildende mögliche Summendehnungsmaß des Trägermaterials ist.

2. Heizelement nach Anspruch 1, dadurch gekennzeichnet, daß dieses mit der Unterseite des Sitzbezuges verbunden ist.

3. Heizelement nach Anspruch 2, dadurch gekennzeichnet, daß die Verbindung mit der Unterseite des Sitzbezuges (5) mittels eines dauerelastischen Klebers oder einem elastisch bleibendem Doppelkleberband hergestellt ist.

4. Heizelement nach Anspruch 1 bis 3, dadurch gekennzeichnet, daß das an der Unterseite des in eine Tiefziehform eingelegten Bezugsstoffes befestigte Heizelement gemeinsam mit dem in diese Tiefziehform eingebrachten, einen Polsterkern (2) bildenden Schaumstoff, eine Einheit bildet.

5. Heizelement nach Anspruch 1, dadurch gekennzeichnet, daß dieses mit der Oberseite des Polsterkernes (2) verbunden ist.

6. Heizelement nach Anspruch 5, dadurch gekennzeichnet, daß die Verbindung des Heizelementes (3) mit der Oberseite des Polsterkernes (2) mittels eines dauerelastischen Klebers oder eines elastisch bleibenden Doppelklebebandes hergestellt ist.

7. Heizelement nach Anspruch 1, dadurch gekennzeichnet, daß dieses um die Seitenflächen des Polsterkernes (2) gezogen und an diesem beliebig befestigt ist.

8. Heizelement nach Anspruch 1 und 7, dadurch gekennzeichnet, daß dieses um die Seitenflächen des Polsterkernes (2) gezogen ist und nach Art eines Spannbettbezuges auf diesem befestigt ist.

9. Heizelement nach Anspruch 1 bis 8, dadurch gekennzeichnet, daß die den Heizleiter (4) aufnehmenden Schichten (3' und 3'') des Trägermaterials aus gewirktem Trikot sind.

10. Heizelement nach Anspruch 1 bis 9, dadurch gekennzeichnet, daß die Isolierung des Heizleiters (4) oberflächenglatt ausgebildet ist.

11. Heizelement nach Anspruch 10, dadurch gekennzeichnet, daß der Heizleiter (4) durch Teflon isoliert ist.

**Claims**

1. A heating element for motor vehicle seats (1), comprising at least two layers (3', 3'') of a resilient substrate and an electrical heat conductor (4) disposed between the said layers (3', 3'') in meander-type or undulatory or the like form, and being suitable for arrangement preferably immediately underneath the seat cover (5) and for introduction into a form of a manufacuring device either separately or along with the seat cover (5), characterized in that layers (3' and 3'') of the substrate of the heating element (3) are formed of a knitted textile material which, in all directions, has a resilient stretch behaviour, and that the insulated and non-adhesive heat conductor (4) is displacably arranged between the layers (3' and 3''))of the substrate otherwise cemented together, along the entire length thereof, with the extent of the maximum displacement of the heat conductor (4) corresponding to or exceeding the additive potential accumulative stretch of the substrate overlappingly formed by stretches in different directions.

2. A heating element according to claim 1, characterized in that the same is connected to the bottom side of the seat cover.

3. A heating element according to claim 2, characterized in that the connection to the bottom side of the seat cover (5) is established by means of a permanently elastic adhesive or a double adhesive tape of permanent elasticity.

4. A heating element according to claims 1 to 3, characterized in that the heating element fixed to the bottom side of the cover material placed into a deep-drawing mould forms a unit jointly with the foam material forming a heart of the filling (2) and placed into the said deep-drawing mould.

5. A heating element according to claim 1, characterized in that the same is connected to the upper side of the filling heart (2).

6. A heating element according to claim 5, characterized in that the connection of the heating element (3) to the upper side of the filling heart (2) is established by means of a permanently elastic adhesive or of a double adhesive tape of permanent elasticity.

7. A heating element according to claim 1, characterized in that the same is drawn about the side faces of the filling heart (2) and secured thereto in any desired form.

8. A heating element according to claims 1 and 7, characterized in that the same is drawn about the side faces of the filling heart (2) and secured thereto in stretch sheettype manner.

9. A heating element according to claims 1 to 8, characterized in that the layers (3' and 3'') of the substrate receiving the heat conductor (4) are made of knitted tricot.

10. A heating element according to claims 1 to 9, characterized in that the insulation of the heat conductor (4) is formed to have a smooth surface.

11. A heating element according to claim 10, characterized in that the heat conductor (4) is insulated by Teflon.

**Revendications**

1. Elément de chauffage pour des sièges (1) de voiture, comportant au moins deux couches (3', 3'') de matière support élastique et un conducteur chauffant électrique (4) pourvu entre les couches dans une manière méandrique ou ondulatoire ou autre choses, l'élément de chauffage disposé préférablement directement au-dessous du tapis de siège et introduit séparément ou en commun avec le tapis de siège (5) dans le moule d'une machine de manufacture, caractérisé en ce que les couches (3' et 3'') de matière support de l'élément de chauffage (3) sont faites par une matière textile tissée ayant comportement d'allongement flexible vers toutes les directions et que le conducteur chauffant (4) isolé et non-adhésif est introduit dans une manière déplaçable entre les couches (3' et 3'') de matière support autrement collées le long de matière support, l'étendue du déplacement maximum du conducteur chauffant (4) correspondant à ou dépassant l'étendue d'allongement cumulée additive se formant par des allongements de direction différente dans une manière superposante.

2. Elément de chauffage selon la revendication 1, caractérisé en ce que le même est relié à la face inférieure du tapis de siège.

3. Elément de chauffage selon la revendication 2, caractérisé en ce que le raccordement à la face intérieure du tapis de siège (5) se fait par l'intermédiaire d'un adhésif d'élasticité permanente ou par un double ruban adhésif restant élastique.

4. Elément de chauffage selon les revendications 1 à 3, caractérisé en ce que l'élément de chauffage fixé à la face inférieure de la matière tapis mise dans un moule pour emboutissage profond, forme un ensemble en commun avec la mousse introduite dans ce moule pour emboutissage et formant le coeur de matelas (2).

5. Elément de chauffage selon la revendication 1, caractérisé en ce que le même est relié à a face supérieure de coeur (2) de matelas.

6. Elément selon la revendication 5, caractérisé en ce que le raccordement de l'élément de chauffage (3) à la face supérieure du coeur de matelas (2) se fait par l'intermédiaire d'un adhésif d'élasticité permanente ou par un double ruban adhésif restant permanent.

7. Elément de chauffage selon la revendication 1, caractérisé en ce que le même est tiré autour les faces laterales du coeur (2) de matelas et fixé au ce coeur dans une manière quelconque.

8. Elément de chauffage selon les revendications 1 et 7, caractérisé en ce que le même est tiré autour des faces latérales du coeur (2) de matelas et fixé au dernier sous forme d'un drap de lit élastique.

9. Elément de chauffage selon des revendication 1 à 8, caractérisé en ce que les couches (3' et 3'') de matière support recevant le conducteur chauffant (4) sont fabricé de tricot tissé.

10. Elément de chauffage selon les revendications 1 à 9, caractérisé en ce que l'isolement de conducteur chauffant (4) est poli.

11. Elément de chauffage selon la revendication 10, caractérisé en ce que le conducteur chauffant (4) est isolé du Téflon.

Fig.1

Fig. 2
(Schnitt I-I aus Fig.1)

Fig. 3
(partieller Ausschnitt A aus Fig.2)

Fig. 4

Fig. 5

(partieller Ausschnitt B
aus Fig. 4)